# EUROPÄISCHE PATENTSCHRIFT

(11) **EP 1 420 264 B1**
(45) Veröffentlichungstag und Bekanntmachung des Hinweises auf die Patenterteilung: **05.01.2011**
(21) Anmeldenummer: 03405792.7
(22) Anmeldetag: 06.11.2003
(51) Int. Cl.: G01S 5/16

(54) **Verfahren und Vorrichtung zur Kalibrierung eines Messsystems**
Method and device for calibrating a measurement system
Procédé et dispositif de calibration d'un système de mesure

(30) Priorität: 15.11.2002 CH 19232002
(43) Veröffentlichungstag der Anmeldung: 19.05.2004
(73) Patentinhaber: Leica Geosystems AG, 9435 Heerbrugg (CH)
(72) Erfinder: Kyle, Stephen, Luckington Wilts SN14 6QR (GB); Von Arb, Konrad, 4612 Wangen bei Olten (CH)
(74) Vertreter: Frei, Alexandra Sarah

(56) Entgegenhaltungen:
- EP-A- 0 957 336
- US-A- 5 973 788
- US-A1- 2001 021 898

## Beschreibung

Die Erfindung liegt auf dem Gebiete der Messtechnik und betrifft ein Verfahren und eine Vorrichtung nach den Oberbegriffen der entsprechenden, unabhängigen Patentansprüche. Verfahren und Vorrichtung dienen zur Kalibrierung eines Messsystems, das zur Bestimmung von räumlicher Position und Orientierung von Objekten anwendbar ist und das ein Messgerät mit einem Lasertracker und einem optoelektronischen Sensor, einen Systemrechner und ein Messhilfeobjekt aufweist.

Der Begriff Lasertracker oder Tracker wird im vorliegenden Zusammenhang verwendet für eine Vorrichtung, in der ein optischer Messstrahl, vorteilhafterweise ein Laserstrahl generiert wird und die ferner ausgerüstet ist mit einem optischen System zur Ausrichtung des Messstrahles auf einen Zielpunkt, der den Messstrahl parallel zurück zur Vorrichtung reflektiert (z.B. Würfeleckenprisma), mit einem Mittel zur Analyse des reflektierten Messstrahles zur absoluten oder relativen Bestimmung der Länge des Strahlenganges und mit einem Mittel zur Erfassung der absoluten oder relativen Richtung des Messstrahles. Aus den erfassten Daten bezüglich Länge und Richtung des Strahlenganges zwischen dem Lasertracker und dem Reflektor können räumliche Koordinaten des Reflektors relativ zum Lasertracker berechnet werden. Das optische System des Trackers ist vorteilhafterweise derart ausgerüstet, dass der Messstrahl einem sich bewegenden Zielpunkt automatisch folgen kann. Lasertracker der Firma Leica Geosystems sind auf dem Markte erhältlich. Andere Geräte, wie beispielsweise motorisierte Theodoliten, die zusätzlich über Mittel zur Distanzmessung verfügen, fallen ebenfalls unter die obige Definition.

Der Begriff optoelektronischer Sensor wird im vorliegenden Zusammenhang verwendet für eine Vorrichtung, mit der ein elektronisch auswertbares, zweidimensionales Bild einer räumlichen Anordnung von Lichtpunkten erstellbar ist. Der optoelektronische Sensor weist ein zweidimensionales, lichtempfindliches Array auf und ein Linsensystem mit einer optischen Achse. Er ist beispielsweise eine CCD- oder CID-Kamera oder basiert auf einem CMOS-Array. Zur Auswertung des zweidimensionalen Bildes sind üblicherweise Mittel vorgesehen zur Identifizierung der abgebildeten Lichtpunkte, zur Bestimmung der Schwerpunkte der abgebildeten Lichtpunkte und zur Bestimmung der Bildkoordinaten dieser Schwerpunkte, aus denen Raumwinkel zwischen der optischen Achse des Sensors und der Richtung vom Sensor zu den Lichtpunkten berechnet werden können.

Der Lasertracker und der optoelektronische Sensor sind im Messgerät des vorliegenden Messsystems derart aufeinander montiert, dass ihre Positionen relativ zueinander nicht veränderbar sind. Der Sensor ist beispielsweise zusammen mit dem Lasertrakker um dessen im wesentlichen senkrechte Achse drehbar aber unabhängig vom Lasertracker auf und ab schwenkbar.

Messgeräte mit einem Lasertracker und einem optoelektronischen Sensor gemäss obiger Definitionen und mit einem Systemrechner zur Durchführung der genannten Berechnungen und deren Anwendung für die Bestimmung von Position und Orientierung von Objekten im Raum, an denen Lichtpunkte und Reflektoren angeordnet sind, gehören zum Stande der Technik. Solche Messgeräte sind auf dem Markte erhältlich (z.B. Theodolit Typ T3000V/D der Firma Leica) und beispielsweis in der Publikation US-5973788 beschrieben. Bei der Verwendung solcher Messgeräte werden am Objekt, dessen Position und Orientierung zu bestimmen ist, in relativ zum Objekt bekannten Positionen mindestens drei vom optoelektronischen Sensor registrierbare Lichtpunkte und mindestens ein den Messstrahl des Lasertrackers reflektierender Reflektor angeordnet. Die vom optoelektronischen Sensor zu registrierenden Lichtpunkte können aktive Lichtquellen (z.B. Leuchtdioden) sein oder zu beleuchtende Reflektoren, wobei die Lichtpunkte derart ausgestattet oder angeordnet sind, dass sie eindeutig voneinander unterscheidbar sind.

Das Objekt, dessen Position und Orientierung mit dem genannten Messgerät vermessen wird, ist in verschiedenen Anwendungen nicht das zu vermessende Objekt selbst sondern es ist ein Messhilfsinstrument, das zum Messsystem gehört, das für die Vermessung in eine relativ zum Zielobjekt mechanisch definierte oder während der Vermessung bestimmbare Position gebracht wird und über dessen vermessene Position und Orientierung auf Position und gegebenenfalls Orientierung des zu vermessenden Objektes geschlossen wird. Derartige Messhilfsinstrumente sind beispielsweise sogenannte Tastwerkzeuge, die mit ihrem Kontaktpunkt auf einem Punkt des Zielobjektes positioniert werden. Lichtpunkte und Reflektor des Tastwerkzeuges haben relativ zum Kontaktpunkt genau bekannte Positionen. Solche Tastwerkzeuge sind auf dem Markte erhältlich (z.B. Optrek 3-D Co-ordinate Measuring Stylus der Firma Northern Digital Corp. Canada). Das Messhilfsinstrument kann aber auch ein beispielsweise von Hand gehaltener zur Distanzmessung ausgerüsteter Scanner für berührungslose Oberflächenvermessungen sein, wobei Richtung und Position des für die Distanzmessung verwendeten Scanner-Messstrahles relativ zu Lichtpunkten und Reflektoren, die auf dem Scanner angeordnet sind, genau bekannt sind. Ein derartiger Scanner ist beispielsweise in der Publikation EP-0553266 (Schulz) beschrieben.

Offensichtlich stellen in einem Messsystem, wie es oben beschrieben ist, der Lasertracker und der Reflektor (oder die Reflektoren) des Messhilfsinstruments einerseits und der optoelektronische Sensor und die Lichtpunkte des Messhilfsinstrument andererseits zwei messtechnisch voneinander getrennte Systeme dar, die über die relative Anordnung von Lasertracker und optoelektronischem Sensor im Messgerät und über die relative Anordnung von Lichtpunkten und Reflektor oder Reflektoren auf dem Messhilfsinstrument miteinander gekoppelt sind. Zur Korrelation der beiden Messsysteme ist eine Kalibrierung notwendig, wobei die Kalibrierung den Lasertracker und den optoelektronischen Sensor des Messgerätes und das Messhilfsinstrument betrifft.

Die Erfindung stellt sich die Aufgabe, ein Verfahren und eine Vorrichtung zu erschaffen, die der oben genannten Kalibrierung dienen. Verfahren und Vorrichtung gemäss Erfindung sollen also eine möglichst einfache Kalibrierung eines Messsystems erlauben, wobei das Messsystem einen Systemrechner und ein Messgerät mit einem Lasertracker und einem optoelektronischen Sensor aufweist sowie ein Messhilfsinstrument mit mindestens drei Lichtpunkten und mindestens einem Reflektor. Die Kalibrierung besteht aus Mess- und Berechnungsschritten und die dabei erhaltenen Daten sollen es ermöglichen, durch Messungen des Lasertrackers ermittelte Daten bezüglich des Messhilfsinstruments und durch Messungen des optoelektronischen Sensors ermittelte Daten bezüglich des Messhilfsinstruments miteinander zu koppeln, derart, dass aus allen Messungen stammende Daten jederzeit auf ein gemeinsames Koordinatensystem beispielsweise bezüglich der Lasertrackers bezogen werden können. Die Messschritte der erfindungsgemässen Kalibrierung, für die die erfindungsgemässe Kalibriervorrichtung eingesetzt wird, soll derart einfach sein, dass sie jederzeit von einem Benützer des Messsystems, beispielsweise bei Inbetriebnahme eines neuen Messhilfsinstruments, mit einer hohen Genauigkeit durchführbar sind.

Die Aufgabe wird gelöst durch Verfahren und Vorrichtung, wie sie in den Patentansprüchen definiert sind. -

Die Schritte des erfindungsgemässen Kalibrierverfahrens sind im wesentlichen die folgenden:
- Wenn das Messhilfsinstrument weniger als drei Reflektoren aufweist, wird die Zahl der Reflektoren mit Hilfsreflektoren auf mindestens drei ergänzt. Gegebenenfalls werden die relativen Positionen der Reflektoren und der Hilfsreflektoren bestimmt.
- Das Messhilfsinstrument gegebenenfalls zusammen mit den Hilfsreflektoren wird um mindestens zwei relativ zum Messhilfsinstrument voneinander verschiedene Drehachsen bewegt. Für jede einzelne der Drehachsen werden in mindestens zwei Drehpositionen mit Hilfe des optoelektronischen Sensors die Lichtpunkte auf dem Messhilfsinstrument registriert, wobei bei jeder Messung die mindestens drei Lichtpunkte registriert werden. Für jede Drehachse werden in mindestens zwei Drehpositionen mit Hilfe des Lasertrackers die mindestens drei Reflektoren registriert. Während diesen Messungen bleibt die Position des Messgerätes unverändert.
- Aus den im vorangehenden Messschritt registrierten Messdaten des Lasertrackers und des optoelektronischen Sensors werden für alle Drehpositionen des Messhilfsinstrumentes Position und Orientierung der Reflektoranordnung relativ zum Lasertracker und der Lichtpunktanordnung relativ zum optoelektronischen Sensor berechnet.
- Aus den Positionen und Orientierungen der Reflektoranordnung und der Lichtpunktanordnung werden Richtung und Lage der mindestens zwei Drehachsen relativ zur Reflektoranordnung und relativ zur Lichtpunktanordnung berechnet. Dafür werden Daten bezüglich der bekannten, relativen Positionen der Lichtpunkte und gegebenenfalls der Reflektoren benötigt.
- Dann werden einander entsprechende Drehachsen, die relativ zur Reflektoranordnung einerseits und relativ zur Lichtpunktanordnung andererseits berechnet wurden, einander gleichgesetzt und aus dieser Gleichsetzung werden Kalibrierdaten errechnet, die für das kalibrierte Paar von Messgerät und Messhilfsinstrument Messdaten-Transformationen vom Trakker/Reflektorsystem ins Sensor/Lichtpunkt-System und umgekehrt ermöglichen. Solche Kalibrierdaten sind beispielsweise notwendig zur Berechnung einer beliebigen Position und Orientierung des Messhilfsinstruments bezüglich eines beliebigen Koordinatensystems aus Messdaten von Tracker und Sensor.

Die erfindungsgemässe Vorrichtung dient dazu, das Messhilfsinstrument gegebenenfalls mit Hilfsreflektoren zu kombinieren und in die verschiedenen Drehpositionen um die verschiedenen Drehachsen zu bringen. Sie weist dafür Montagemittel zur genau definierten Montage des Messhilfsinstrumentes in verschiedenen Orientierungen auf, wobei auch das Messhilfsinstrument mit Montagemitteln, die mit den Montagemitteln der Kalibriervorrichtung kooperieren, ausgerüstet sein kann. Wenn für die Kalibrierung Hilfsreflektoren notwendig sind (Messhilfsinstrument weist weniger als drei Reflektoren auf), weist die Vorrichtung zusätzlich ein Reflektorenelement auf, das mit dem Messhilfsinstrument starr verbindbar ist und das zusammen mit dem Messhilfsinstrument in den verschiedenen Orientierungen montiert wird.

Die Vorrichtung weist beispielsweise einen Drehtisch auf, auf dem das Messhilfsinstrument gegebenenfalls zusammen mit dem Reflektorenelement in mindestens zwei verschiedenen Orientierungen montierbar ist, wobei für eine Bewegung in verschiedene Drehpositionen der Drehtisch gedreht wird. Die Vorrichtung kann auch rotationsfrei ausgebildet sein und Montagepositionen und Orientierungen für das Messhilfsinstrument gegebenenfalls zusammen mit dem Reflektorenelement zur Verfügung stellen, die verschiedenen Drehpositionen um mindestens zwei relativ zum Messhilfsinstrument verschiedene Drehachsen darstellen.

Das erfindungsgemässe Verfahren und die erfindungsgemässe Vorrichtung werden anhand der folgenden Figuren mehr im Detail beschrieben. Alle Figuren zeigen die gleiche vorteilhafte Ausführungsform der Anordnung von Reflektoren und Zielpunkten auf dem Messhilfsinstrument, die aber für die Erfindung keine Bedingung darstellt. Von den Figuren zeigen:
- **Figur 1**: ein beispielhaftes, an sich bekanntes Messsystem, für das das erfindungs- gemässe Kalibrierverfahren und die erfindungsgemässe Kalibriervorrich- tung anwendbar sind;
- **Figur 2**: das für die Kalibrierung mit Hilfsreflektoren versehene Messhilfsinstru- ment des Messsystems gemäss Figur 1;
- **Figur 3**: eine beispielhafte Ausführungsform der erfindungsgemässen Kalibrier- vorrichtung für das Messsystem gemäss Figur 1;
- **Figuren 4 bis 6**: Illustrationen zu den aufeinanderfolgenden Schritten des er- findungsgemässen Kalibrierverfahrens;
- **Figur 7**: ein auch als Lichtpunkt ausgerüsteter Reflektor zur Anwendung am Messhilfsinstrument.

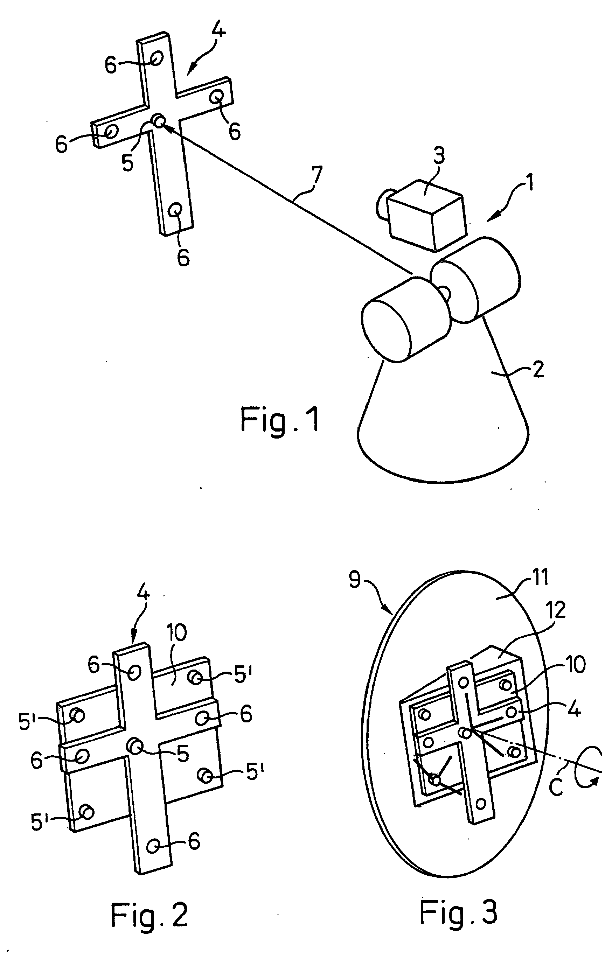

**Figur 1** zeigt in einer sehr schematischen Art ein beispielhaftes, an sich bekanntes Messsystem, das nach dem erfindungsgemässen Verfahren und mit Hilfe der erfindungsgemässen Vorrichtung kalibrierbar ist. Das Messsystem weist ein Messgerät 1 auf, in dem ein Lasertracker 2 und ein optoelektronischer Sensor 3 derart aufeinander montiert oder ineinander integriert sind, dass ihre relative Position unveränderbar ist. Das Messsystem weist ferner einen nicht dargestellten Systemrechner auf.

Das Messsystem weist ferner ein Messhilfsinstrument 4 auf, das im dargestellten Fall einen Reflektor 5 und vier identifizierbare Lichtpunkte 6 aufweist. In der Figur 1 wie auch in allen folgenden Figuren sind nur die für die Kalibrierung relevanten Teile des Messhilfsinstruments dargestellt, nämlich die Anordnung von Reflektor 5 und Lichtpunkten 6. Das Messhilfsinstrument kann irgend eine für seine messtechnische Funktion geeignete Form aufweisen. Der Reflektor 5 ist ausgerüstet für eine parallele Reflexion des Messstrahles 7 des Lasertrackers 2. Es handelt sich beispielsweise um ein Würfeleckenprisma. Die Lichtpunkte 6 sind für eine Registrierung durch den optoelektronischen Sensor bestimmt und sind beispielsweise LEDs oder reflektierende und für Messungen entsprechend zu beleuchtende Punkte. Sie sind entweder durch ihre relative Anordnung oder durch entsprechende Identifikationsmittel eindeutig identifizierbar.

Eine dreidimensionale Anordnung (nicht in einer Ebene) der vier Lichtpunkte 6 und eine Anordnung des Reflektors 5 in einem zentralen Bereich der Lichtpunktanordnung sind bekannterweise für Messungen vorteilhaft. Auch für die erfindungsgemässe Kalibrierung sind sie vorteilhaft aber sie stellen keine Bedingung dar. Ein Messhilfsinstrument mit einem einzigen Reflektor ist insbesondere vorteilhaft für Anwendungen, in denen das Messhilfsinstrument 4 vom Lasertracker 2 automatisch verfolgt wird.

Das Messhilfsinstrument 4 ist wie weiter oben bereits erwähnt beispielsweise ein Tastwerkzeug, dessen Kontaktpunkt auf zu vermessenden Punkten positioniert wird, oder ein Scanner, der zur Distanzmessung ausgerüstet ist und für eine berührungsfreie Vermessung von Oberflächen beispielsweise von Hand über diese hinweggeführt wird.

**Figur 2** zeigt das Messhilfsinstrument 4 der Figur 1, das mit vier Hilfsreflektoren 5' kombiniert ist. Diese Hilfsreflektoren 5' sind auf einem Reflektorenelement 10 (z.B. Reflektorenplatte) angeordnet. Das Reflektorenelement 10 ist für ein Messhilfsinstrument mit weniger als drei Reflektoren ein notwendiger Bestandteil der Kalibriervorrichtung. Es ist mit dem Messhilfsinstrument starr verbindbar ist. Die Anordnung der insgesamt beispielsweise fünf Reflektoren ist vorteilhafterweise dreidimensional.

**Figur 3** zeigt eine beispielhafte Ausführungsform der erfindungsgemässen Kalibriervorrichtung 9, auf der das Messhilfsinstrument gemäss Figuren 1 und 2 montiert ist. Die Vorrichtung weist die bereits in Figur 2 gezeigte, starr mit dem Messhilfsinstrument verbindbare Reflektorenelement 10 auf sowie einen Drehtisch 11 mit einer Drehachse C, auf dem fest ein beispielsweise keilförmiges Orientierungselement 12 montiert ist. Das Orientierungselement 12 weist nicht näher dargestellte Mittel auf, mit deren Hilfe das Messhilfsinstrument 4 bzw. das Messhilfsinstrument 4 und das damit starr verbundene Reflektorenelement in mindestens zwei verschiedenen Orientierungen montierbar ist. Anstelle des Drehtisches 11 kann auch ein Element vorgesehen werden, das mindestens zwei Gruppen von je mindestens zwei Montagepositionen für das Messhilfsinstrument 4 gegebenenfalls zusammen mit dem Reflektorenelement 10 aufweist, wobei die Orientierungen jeder Gruppe derart sind, dass sie durch Drehung um eine virtuelle Drehachse ineinander überführbar sind.

Es scheint, dass theoretisch der Winkel zwischen den beiden mit dem Kalibrierwerkzeug erstellbaren relativ zum Messhilfsinstrument verschiedenen Drehachsen optimal 90° beträgt. Bei der Verwendung von Reflektoren mit einem Öffnungswinkel von ±20° kann dieser Winkel nur etwa 25 bis 30° sein, womit aber eine genügende Genauigkeit erzielt werden kann.

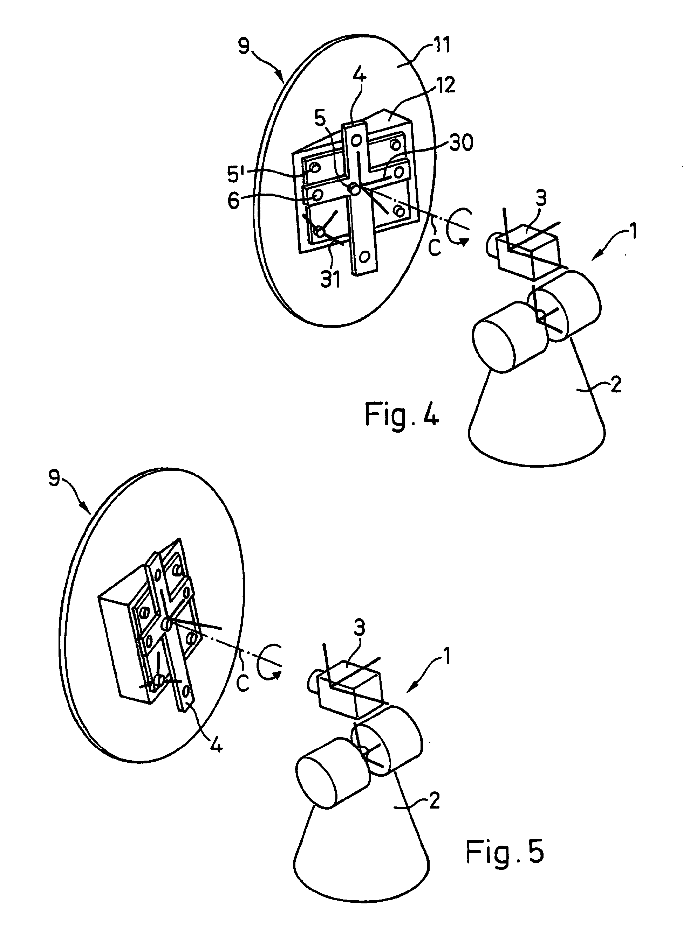

**Figuren 4 und 5** zeigen die Messanordnung für das erfindungsgemässe Verfahren. Das Messgerät 1 wird vorteilhafterweise derart relativ zur Kalibriervorrichtung 9 positioniert, dass die optische Achse des optoelektronischen Sensors 3 etwa auf die Drehachse C des Drehtisches ausgerichtet ist und derart, dass die Lichtpunktanordnung des Messhilfsinstruments 4 in allen vorgesehenen Drehpositionen vollständig und möglichst gross auf der Bildfläche des optoelektronischen Sensors abgebildet werden kann.

Figur 4 zeigt die Messanordnung für eine erste und Figur 5 die gleiche Messanordnung für eine zweite Drehachse relativ zum Messhilfsinstrument 4. Die beiden Messanordnungen unterscheiden sich dadurch, dass das Messhilfsinstrument 4 zusammen mit dem Reflektorenelement 10 auf dem Orientierungselement 12 um 180° gedreht ist, derart, dass die Drehachse C das Messhilfsinstrument 4 in beiden Fällen vorteilhafterweise in einem mittleren Bereich aber in zwei verschiedenen Richtungen und vorteilhafterweise an zwei verschiedenen Orten durchläuft.

Wenn die relativen Positionen der Lichtpunkte und gegebenenfalls der Reflektoren und Hilfsreflektoren nicht vorgängig bekannt sind, sind diese für die Berechnung der Kalibrierdaten zu ermitteln. Die relativen Positionen der Lichtpunkte werden beispielsweise ermittelt durch mehrfache Registrierung mit dem optoelektronischen Sensor oder einem mit gleichen Funktionen ausgestatteten Gerät und Bündelausgleich. Dafür wird ein der Lichtpunktanordnung eigenes Koordinatensystem 30 gewählt, das vorteilhafterweise einen Ursprung im zentralen Bereich der Lichtpunktanordnung hat und dessen z-Achse in der Kalibrieranordnung gegen das Messgerät 1 gerichtet ist. Die relativen Positionen der Reflektoren werden beispielsweise mit dem Tracker oder mit einem anderen Gerät mit ähnlichen Funktionen ermittelt. Dafür wird ein der Reflektoranordnung eigenes Koordinatensystem 31 gewählt, dessen Ursprung in einem der Hilfsreflektoren liegt und dessen z-Achse senkrecht auf der Reflektorplatte steht.

Aus den Messdaten, die aus den Messungen mit den Messanordnungen gemäss Figuren 4 und 5 von Lasertracker und optoelektronischem Sensor resultieren und die je mindestens zwei Drehpositionen um mindestens zwei relativ zum Messhilfsinstrument verschiedene Drehachsen je für die Lichtpunktanordnung und die Reflektoranordnung betreffen, werden Daten bezüglich der relativen Positionen und Orientierungen der Lichtpunktanordnung relativ zum optoelektronischen Sensor und Daten der relativen Positionen und Orientierungen der Reflektoranordnung relativ zum Lasertracker berechnet, wofür verschiedene, an sich bekannte mathematische Modelle zur Verfügung stehen.

Die Positionen und Orientierungen der Lichtpunktanordnung relativ zum optoelektronischen Sensor werden beispielsweise mit einer iterativen Rückwärtseinschnitt-Methode berechnet, wobei als Startwerte eine Position des Ursprungs des Koordinatensystems 30 auf der optischen Achse des optoelektronischen Sensors und eine auf Parallelprojektion beruhende Rotationsmatrix mit der genannten optischen Achse als Rotationsachse verwendet werden.

Die Positionen und Orientierungen der Reflektoranordnung relativ zum Lasertracker können beispielsweise mittels Ausrichtung der lokalen Achsen (local axis alignment) errechnet werden, wozu die relativen Positionen der Reflektoren in der Reflektoranordnung bekannt sein müssen, oder mittels eines mathematischen Kreismodells (z.B. Axyz-Modul von Leica) berechnet werden.

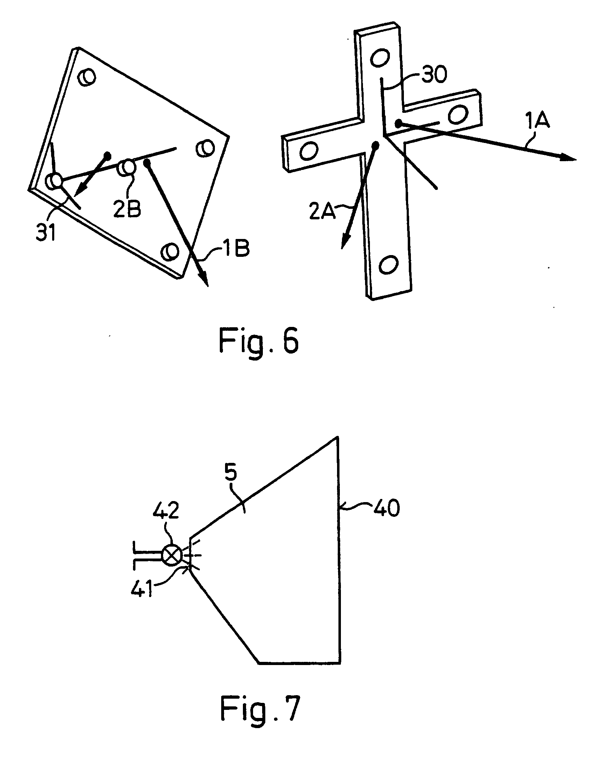

In einem weiteren Berechnungsschritt werden aus den zu je einer Drehachse gehörenden Positionen und Orientierungen der Lichtpunktanordnung und der Reflektoranordnung Richtung und Position der jeweiligen Drehachse in den Koordinatensystemen 30 und 31 berechnet. In der Figur 6 sind die Reflektoranordnung und die Lichtpunktanordnung mit den Koordinatensystemen 30 und 31 separat dargestellt und die zwei Drehachsen in den beiden Systemen mit 1A und 1B einerseits und 2A und 2B andererseits bezeichnet.

In einem dritten Berechnungsschritt werden im Prinzip die Achsen 1A und 1B bzw. die Achsen 2A und 2B einander gleichgesetzt, woraus die gesuchten Kalibrierungsdaten resultieren, die eine Koordinatentransformation vom Koordinatensystem 30 in das Koodinatensystem 31 oder umgekehrt erlauben oder allgemeiner eine Transformation von vom Lasertracker bezüglich Reflektor (oder Reflektoren) des Messhilfsinstrumentes erzeugten Messdaten auf Berechnungen, die sich auf Messdaten vom optoelektronischen Sensor bezüglich der Lichtpunkte des Messhilfsintrumentes beziehen.

Die erzeugten Kalibrierdaten werden im Systemrechner gespeichert und für folgende Messvorgänge gespeichert. Wenn in einem Messsystem verschiedene Messhilfsinstrumente verwendet werden, wird die Kalibrierung für jedes der Instrumente durchgeführt und die Kalibrierdaten zusammen mit einer Instrumentenidentifikation gespeichert. Für die Kalibrierung benötigte Algorithmen und Programme und vorteilhafterweise Vorgaben für eine Bedienungsperson zur Durchführung der Messschritte des Kalibrierverfahrens sind ebenfalls im Systemrechner gespeichert und für die Durchführung des Kalibrierverfahrens aktivierbar.

**Figur 7** zeigt, in wiederum sehr schematischer Art ein als Reflektor 5 einsetzbares Würfeleckenprisma, das gleichzeitig als Lichtpunkt ausgestaltet ist. Das modifizierte Würfeleckenprisma weist anstelle der effektiven Würfelecke eine zur Eintritts- und Austrittsfläche 40 parallele Fläche 41 auf, die kleiner ist als der Durchmesser des Messstrahles des Lasertrackers. Hinter der Fläche 41 ist eine Lichtquelle 42, z.B. eine Leuchtdiode angeordnet, die die Fläche 41 zu einem vom optoelektronischen Sensor detektierbaren Lichtpunkt macht. Wird anstelle des Reflektors 5 des Messhilfsinstrumentes gemäss Figur 1 ein derart kombinierter Reflektor/Leuchtpunkt verwendet, der einen gleichen Punkt sowohl im Koordinatensystem der Lichtpunktanordnung und im Koordinatensystem der Reflektoranordnung darstellt, vereinfacht sich die Kalibrierung. Allerdings ist für die Registrierung des entsprechenden Lichtpunktes mit dem optoelektronischen Sensor eine Korrektur vorzunehmen, die von einer Abweichung der Richtung zwischen dem optoelektronischen Sensor und der Fläche 40, von der Höhe des Prismas zwischen den Flächen 40 und 41 und vom Brechungsindex des Prismenmaterials abhängig ist.

## Patentansprüche

1. Verfahren zur Kalibrierung eines Messsystems, das ein Messgerät (1) mit einem Lasertracker (2) und einem optoelektronischen Sensor (3) in relativ zueinander unveränderbaren Positionen, ein Messhilfsinstument (4) und einen Systemrechner aufweist, wobei am Messhilfsinstrument (4) mindestens ein Reflektor (5) zur Reflexion eines vom Lasertracker (2) darauf gerichteten Messstrahles (7) und mindestens drei vom optoelektronischen Sensor (3) registrierbare Lichtpunkte (6) in einer bekannten Lichtpunktanordnung angeordnet sind, **dadurch gekennzeichnet, dass** das Messhilfsinstrument (4), wenn es weniger als drei Reflektoren (5) als Reflektoranordnung aufweist, mit einer Anordnung von Hilfsreflektoren (5') starr verbunden und damit die Zahl der Reflektoren der Reflektoranordnung auf mindestens drei ergänzt wird, dass das Messhilfsinstrument (4) gegebenenfalls zusammen mit der Anordnung von Hilfsreflektoren (5') um mindestens zwei relativ zum Messhilfsinstrument (4) voneinander verschiedene Drehachsen, die die Lichtpunktanordnung und die Reflektoranordnung in einem mittleren Bereich in verschiedenen Richtungen durchlaufen, bewegt wird, dass in mindestens je zwei Drehpositionen um jede der mindestens zwei Drehachsen durch den Lasertracker (2) bezüglich der mindestens drei Reflektoren (5) und gegebenenfalls Hilfsreflektoren (5') und durch den optoelektronischen Sensor (3) bezüglich der mindestens drei Lichtpunkte (6) Messdaten registriert werden, dass aus den Messdaten des Lasertrackers (2) Positionen und Orientierungen der Reflektoranordnung relativ zum Lasertracker (2) und aus den Messdaten des optoelektronischen Sensors (3) Positionen und Orientierungen der Lichtpunktanordnung relativ zum optoelektronischen Sensor (3) berechnet werden, dass aus den Positionen und Orientierungen der beiden Anordnungen die mindestens zwei Drehachsen (1A, 2A) relativ zur Reflektoranordnung und die mindestens zwei Drehachsen (1B, 2B) relativ zur Lichtpunktanordnung berechnet werden und dass durch Gleichsetzung der gleichen Drehachsen (1A mit 1B, 2A mit 2B) in den beiden Anordnungen Kalibrierdaten berechnet und im Systemrechner gespeichert werden.

2. Verfahren nach Anspruch 1, **dadurch gekennzeichnet, dass** die mindestens zwei relativ zum Messhilfsinstrument (4) verschiedenen Drehachsen erzeugt werden, **dadurch**, dass das Messhilfsinstrument (4) gegebenenfalls zusammen mit der Anordnung von Hilfsreflektoren (5') in mindestens zwei relativ zu einer stationären Drehachse verschiedenen Orientierungen montiert wird und dass es in jeder der Orientierungen um die stationäre Drehachse (C) bewegt wird.

3. Verfahren nach Anspruch 1, **dadurch gekennzeichnet, dass** die mindestens zwei relativ zum Messhilfsinstrument (4) verschiedenen Drehachsen erzeugt werden, **dadurch**, dass das Messhilfsinstrument (4) gegebenenfalls zusammen mit der Anordnung von Hilfsreflektoren (5') in mindestens zwei verschiedenen ersten Orientierungen und in mindestens zwei zweiten Orientierungen montiert wird, wobei die zweiten Orientierungen derart gewählt werden, dass jede erste Orientierung durch Drehung um eine virtuelle Drehachse (C) in mindestens eine zweite Orientierung überführbar ist.

4. Verfahren nach einem der Ansprüche 2 oder 3, **dadurch gekennzeichnet, dass** die stationäre bzw. die virtuelle Drehachse (C) durch einen mittleren Bereich der Reflektoranordnung und der Lichtpunktanordnung verläuft.

5. Verfahren nach einem der Ansprüche 1 bis 4, **dadurch gekennzeichnet, dass** der Winkel zwischen den relativ zum Messhilfsobjekt verschiedenen Drehachsen mindestens 25 bis 30° beträgt.

6. Verfahren nach Anspruch 2 oder 3, **dadurch gekennzeichnet, dass** für den Schritt der Registrierung der Messdaten die optische Achse des optoelektronischen Sensors (3) etwa auf die stationäre bzw. virtuelle Drehachse (C) gelegt wird.

7. Verfahren nach Anspruch 6, **dadurch gekennzeichnet, dass** für den Schritt der Berechnung der Positionen und Orientierungen der Lichtpunktanordnung relativ zum optoelektronischen Sensor (3) eine iterative Zurückeinschnitt-Methode verwendet wird.

8. Verfahren nach einem der Ansprüche 1 bis 7, **dadurch gekennzeichnet, dass** für die Berechnung der Positionen und Orientierungen der Reflektoranordnung relativ zum Lasertracker (2) eine Methode der Ausrichtung der lokalen Achsen angewendet wird, wobei dafür vorgängig die relativen Positionen der Reflektoren (5) und gegebenenfalls der Hilfsreflektoren (5') bestimmt wird.

9. Vorrichtung (9) zur Kalibrierung eines Messsystems, das ein Messgerät (1) mit einem Lasertracker (2) und einem optoelektronischen Sensor (3) in relativ zueinander unveränderbaren Positionen, ein Messhilfsinstrument (4) und einen Systemrechner aufweist, wobei am Messhilfsinstrument (4) mindestens ein Reflektor (5) zur Reflexion eines vom Lasertracker (2) darauf gerichteten Messstrahles (7) und mindestens drei vom optoelektronischen Sensor (3) registrierbare Lichtpunkte (6) in relativ zueinander bekannten Positionen angeordnet sind, **dadurch gekennzeichnet, dass** die Vorrichtung (9) für den Fall eines Messhilfsinstrumentes mit weniger als drei Reflektoren als Reflektoranordnung ein Reflektorenelement mit Hilfsreflektoren aufweist, wobei das Messhilfsinstrument auf dem Reflektorenelement starr montierbar ist und das Messhilfsinstrument und das Reflektorenelement zusammen eine Anordnung von mindestens drei Reflektoren als Reflektoranordnung aufweisen,
dass die Vorrichtung Montagemittel aufweist, mit denen das Messhilfsinstrument (4), oder im Fall eines Messhilfsinstruments mit weniger als drei Reflektoren das Messhilfsinstrument zusammen mit dem Reflektorenelement, in mindestens zwei verschiedenen Orientierungen auf der Vorrichtung (9) montierbar ist, derart, dass Messdaten ermittelbar sind bezüglich der Lichtpunktanordnung und bezüglich der Reflektoranordnung in mindestens je zwei Drehpositionen um relativ zum Messhilfsinstrument mindestens zwei voneinander verschiedenen Drehachsen, die die Lichtpunktanordnung und die Reflektoranordnung in einem mittleren Bereich in verschiedenen Richtungen durchlaufen, und dass die Vorrichtung (9) ferner Positionierungsmittel aufweist, mit denen sie relativ zum Messgerät (1) derart positionierbar ist, dass das darauf montierte Messhilfsinstrument (4) in jeder der Drehpositionen durch den Lasertracker (2) und den optoelektronischen Sensor (3) des Messgerätes (1) vermessbar ist.

10. Vorrichtung nach Anspruch 9, **dadurch gekennzeichnet, dass** die Vorrichtung einen Drehtisch (11) und ein auf dem Drehtisch montiertes Orientierungselement (12) aufweist und dass die Montagemittel auf dem Orientierungselement (12) angeordnet sind.

11. Vorrichtung nach Anspruch 10, **dadurch gekennzeichnet, dass** das Orientierungselement (12) keilförmig ist.

12. Vorrichtung nach Anspruch 9, **dadurch gekennzeichnet, dass** die Vorrichtung Montagemittel aufweist, mit denen das Messhilfsinstrument (4), oder im Fall eines Messhilfsinstruments mit weniger als drei Reflektoren das Messhilfsinstrument zusammen mit dem Reflektorenelement, in mindestens vier Orientierungen montierbar ist, wobei je mindestens zwei der Orientierungen durch Drehung um eine virtuelle Drehachse ineinander überführbar sind.

13. Messsystem, das ein Messgerät (1) mit einem Lasertracker (2) und einem optoelektronischen Sensor (3) in relativ zueinander unveränderbaren Positionen, ein Messhilfsinstrument (4) und einen Systemrechner aufweist, wobei am Messhilfsinstrument (4) mindestens ein Reflektor (5) zur Reflexion eines vom Lasertracker (2) darauf gerichteten Messstrahles (7) und mindestens drei vom optoelektronischen Sensor (3) registrierbare Lichtpunkte (6) in einer bekannten Lichtpunktanordnung angeordnet sind, **dadurch gekennzeichnet, dass** der Systemrechner zur Durchführung der Berechnungsschritte des Verfahrens nach einem der Ansprüche 1 bis 8 ausgerüstet ist, dass der Systemrechner einen Speicherplatz für die nach dem Verfahren berechneten Kalibrierdaten aufweist, dass der Systemrechner ferner für Rechenschritte, in denen die gespeicherten Kalibrierdaten verwendet werden, ausgerüstet ist und dass das System ferner eine Vorrichtung zur Kalibrierung gemäss einem der Ansprüche 9 bis 12 aufweist.

14. Messsystem nach Anspruch 13, **dadurch gekennzeichnet, dass** das Messhilfsinstrument (4) Mittel für die Montage auf der Vorrichtung zur Kalibrierung aufweist.

15. Messsystem nach einem der Ansprüche 13 oder 14, **dadurch gekennzeichnet, dass** mindestens einer der Reflektoren (5) des Messhilfsinstrumentes (4) ein Würfeleckenprisma ist, dessen Eckbereich fehlt, und dass hinter dem entfernten Eckbereich ein durch den optoelektronischen Sensor (3) registrierbarer Lichtpunkt (6) angeordnet ist.

## Claims

1. Method for calibrating a measurement system comprising a measuring device (1) with a laser tracker (2) and an opto-electronic sensor (3) having fixed positions relative to each other, an auxiliary measuring tool (4) and a system computer, wherein the auxiliary measuring tool (4) comprises at least one reflector (5) for the reflection of a measuring beam (7) directed on to it by the laser tracker (2) and at least three light spots (6) to be registered by the opto-electronic sensor (3) and being arranged in a known light spot arrangement, **characterized in that**, if the auxiliary measuring tool (4) comprises fewer than three reflectors (5) as a reflector arrangement, it is rigidly coupled with an arrangement of auxiliary reflectors (5') increasing the number of reflectors in the reflector arrangement to at least three, that the auxiliary measuring tool (4), if applicable together with the arrangement of auxiliary reflectors (5'), is moved around at least two rotation axes differing in relation to the auxiliary measuring tool (4) and traversing a central area of the reflector arrangement in different directions, that in at least two rotation positions around each one of the at least two rotation axes, measurement data regarding the at least three reflectors (5) and, if applicable, auxiliary reflectors (5') are registered by the laser tracker (2) and measurement data regarding the at least three light spots (6) are registered by the opto-electronic sensor (3), that positions and orientations of the reflector arrangement relative to the laser tracker (2) are calculated from the measured data of the laser tracker (2) and positions and orientations of the light spot arrangement relative to the opto-electronic sensor (3) are calculated from the measured data of the opto-electronic sensor (3), that the at least two rotation axes (1A, 2A) relative to the reflector arrangement and the at least two rotation axes (1B, 2B) relative to the light spot arrangement are calculated from the positions and orientations of the two arrangements, and that calibration data are calculated and stored in the system computer by equating corresponding rotation axes (1A with 1B, 2A with 2B) of the two arrangements.

2. Method according to claim 1, **characterized in that** the at least two rotation axes being different in relation to the auxiliary measuring tool (4) are created by the auxiliary measuring tool (4), if applicable together with the arrangement of auxiliary reflectors (5'), being installed in at least two different orientations relative to a stationary rotation axis (C) and that in each one of the orientations the auxiliary measuring tool is rotated around the stationary rotation axis (C).

3. Method according to claim 1, **characterized in that** the at least two rotation axes being different relative to the auxiliary measuring tool (4) are created by the auxiliary measuring tool (4), if applicable together with the arrangement of auxiliary reflectors (5'), being installed in at least two different first orientations and in at least two different second orientations, wherein the second orientations are selected in such a manner, that, every first orientation can be transported into at least one second orientation by rotation around a virtual rotation axis (C).

4. Method according to one of claims 2 or 3, **characterized in that** the stationary or virtual rotation axis (C) passes through a central area of the reflector arrangement and of the light spot arrangement.

5. Method according to one of claims 1 to 4, **characterized in that** the angle between the two rotation axes differing in relation to the auxiliary measuring object amounts to at least 25 to 30°.

6. Method according to one of claims 2 or 3, **characterized in that** for the step of registering measured data, the optical axis of the opto-electronic sensor (3) is placed approximately on the stationary or virtual rotation axis (C).

7. Method according to claim 6, **characterized in that** an iterative reverse intersection method is used for the step of calculating positions and orientations of the light spot arrangement relative to the opto-electronic sensor (3).

8. Method accordance to one of claims 1 to 7, **characterized in that** a method of local axes alignment is used for the calculation of the positions and orientations of the reflector arrangement relative to the laser tracker (2), wherein the relative positions of the reflectors (5) and, if applicable, of the auxiliary reflectors (5') are determined in advance.

9. Device (9) for calibrating a measurement system comprising a measuring device (1) with a laser tracker (2) and an opto-electronic sensor (3) having fixed positions relative to one another, an auxiliary measuring tool (4) and a system computer, wherein the auxiliary measuring tool (4) comprises at least one reflector (5) for reflecting a measuring beam (7) directed on to it by the laser tracker (2) and at least three light spots (6) capable of being registered by the opto-electronic sensor (3), the light spots being arranged in known positions relative to one another, **characterized in that** the device (9) comprises a reflector element with auxiliary reflectors for the case of an auxiliary measuring tool (4) with less than three reflectors as a reflector arrangement, wherein the auxiliary measuring tool (4) can be mounted rigidly upon the reflector element and the combined auxiliary measuring tool (4) and reflector element comprise an arrangement of at least three reflectors as a reflector arrangement, that the device comprises installation means allowing the auxiliary measuring tool (4), or, in the case of an auxiliary measuring tool with less than three reflectors, the auxiliary measuring tool together with the reflector element, to be mounted on the device (9) in at least two different orientations in such a manner that data in relation to the light spot arrangement and in relation to the reflecter arrangement can be generated in two orientations around each of at least two axes differing from each other in relation to the auxiliary measuring tool and traversing a central region of the light spot arrangement and a central region of the reflector arrangement in different directions, and that the device (9) further comprises positioning means affording the device to be positioned relative to the measuring device (1) in such a manner that the auxiliary measuring tool (4) mounted on the device can be registered in each one of the orientations by the laser tracker (2) and by the opto-electronic sensor (3) of the measuring device (1).

10. Device according to claim 9, **characterized in that** the device comprises a revolving table (11) and an orientation element (12) installed on the revolving table and that the installation means are arranged on the orientation element (12).

11. Device according to claim 10, **characterized in that** the orientation element (12) is wedge-shaped.

12. Device according to claim 9, **characterized in that** the device comprises installation means affording the auxiliary measuring tool (4), or, in the case of an auxiliary measuring tool with less than three reflectors, the auxiliary measuring tool together with the reflector element, to be mounted in at least four different orientations, wherein groups of at least two of the orientations may be transferred from one to the other by rotation around a virtual rotation axis.

13. Measurement system comprising a measuring device (1) with a laser tracker (2) and an opto-electronic sensor (3) having fixed positions relative to one another, an auxiliary measuring tool (4) and a system computer, wherein the auxiliary measuring tool (4) comprises at least one reflector (5) for reflecting a measuring beam (7) directed on to it by the laser tracker (2) and at least three light spots (6) for being registered by the opto-electronic sensor (3), the light spots being arranged in a known light spot arrangement, **characterized in that** the system computer is equipped for carrying out the calculation steps of the method according to any one of claims 1 to 8, that the system computer comprises a storage space for storing calibration data calculated according to said method and that the system computer comprises a device for calibration according to any one of the claims 9 to 12.

14. Measuring system according to claim 13, **characterized in that** the auxiliary measuring tool (4) comprises means for being mounted on the calibration device.

15. Measuring system according to one of claims 13 or 14, **characterized in that** at least one of the reflectors (5) of the auxiliary measuring tool (4) is a cube corner prism, the corner zone of which is missing, and that behind the removed corner zone a light spot (6) to be registered by the opto-electronic sensor (3) is arranged.

## Revendications

1. Procédé d'étalonnage d'un système de mesure qui présente :
un appareil de mesure (1) doté d'un suiveur laser (2) et d'un détecteur optoélectronique (3) disposés en des positions mutuellement inchangeables,
un instrument auxiliaire de mesure (4) et un calculateur système,
au moins un réflecteur (5) qui réfléchit un faisceau de mesure (7) orienté sur lui par le suiveur laser (2),
au moins trois points lumineux (6) aptes à être enregistrés par le détecteur optoélectronique (3) étant disposés en un agencement connu de points lumineux sur l'instrument auxiliaire de mesure (4),
**caractérisé en ce que**
lorsqu'il présente moins de trois réflecteurs (5) comme ensemble de réflecteurs, l'instrument auxiliaire de mesure (4) est relié solidairement à un ensemble de réflecteurs auxiliaires (5'), le nombre des réflecteurs de l'ensemble de réflecteurs étant ainsi complété à au moins trois,
**en ce que** l'instrument auxiliaire de mesure (4) est déplacé, éventuellement en même temps que l'ensemble de réflecteurs auxiliaires (5'), autour d'au moins deux axes de rotation qui diffèrent l'un de l'autre par rapport à l'instrument auxiliaire de mesure (4) et qui traversent une partie centrale de l'ensemble de points lumineux et de l'ensemble de réflecteurs dans des directions différentes,
**en ce que** dans au moins chacune des deux positions de rotation autour de chacun des deux ou plusieurs axes de rotation, des données de mesure sont enregistrées par le suiveur laser (2) sur trois ou plusieurs réflecteurs (5) et éventuels réflecteurs auxiliaires (5') et par le détecteur optoélectronique (3) sur les trois ou plusieurs points lumineux (6),
**en ce que** les positions et les orientations de l'ensemble de réflecteurs par rapport au suiveur laser (2) sont calculées à partir des données de mesure du suiveur laser (2),
**en ce que** les positions et les orientations de l'ensemble de points lumineux par rapport aux détecteurs optoélectroniques (3) sont calculées à partir des données de mesure du détecteur optoélectronique (3),
**en ce qu'**à partir des positions et des orientations des deux ensembles, les deux ou plusieurs axes de rotation (1A, 2B) sont calculés par rapport à l'ensemble de réflecteurs et les deux ou plusieurs axes de rotation (1B; 2B) sont calculés par rapport à l'ensemble de points lumineux et
**en ce que** des données d'étalonnage sont calculées en faisant coïncider les axes de rotation identiques (1A avec 1B, 2A avec 2B) des deux agencements et sont conservées en mémoire dans le calculateur système.

2. Procédé selon la revendication 1, **caractérisé en ce que** les deux ou plusieurs axes de rotation différents par rapport à l'instrument auxiliaire de mesure (4) sont formés en montant l'instrument auxiliaire de mesure (4), éventuellement en même temps que l'ensemble de réflecteurs auxiliaires (5'), en au moins deux orientations différentes par rapport à un axe de rotation stationnaire et **en ce que** l'instrument auxiliaire de mesure est déplacé dans chacune des orientations autour de l'axe de rotation stationnaire (C).

3. Procédé selon la revendication 1, **caractérisé en ce que** les deux ou plusieurs axes de rotation différents par rapport à l'instrument auxiliaire de mesure (4) sont formés en montant l'instrument auxiliaire de mesure (4), éventuellement en même temps que l'agencement de réflecteurs auxiliaires (5'), en au moins deux premières orientations différentes et en au moins deux deuxièmes orientations, les deuxièmes orientations étant sélectionnées de telle sorte que chaque première orientation puisse être amenée dans au moins une deuxième orientation par rotation autour d'un axe de rotation virtuel (C).

4. Procédé selon l'une des revendications 2 ou 3, **caractérisé en ce que** l'axe de rotation (C) ou l'axe de rotation stationnaire ou virtuel (C) traversent une partie centrale de l'ensemble de réflecteurs et de l'ensemble de points lumineux.

5. Procédé selon l'une des revendications 1 à 4, **caractérisé en ce que** l'angle entre les axes de rotation différents par rapport à l'objet auxiliaire de mesure est d'au moins 25 à 30°.

6. Procédé selon les revendications 2 ou 3, **caractérisé en ce que** pour l'étape d'enregistrement de données de mesure, l'axe optique du détecteur optoélectronique (3) est placé sensiblement sur l'axe de rotation stationnaire ou virtuel (C).

7. Procédé selon la revendication 6, **caractérisé en ce qu'**il utilise une méthode itérative à rétroaction pour l'étape de calcul des positions et des orientations de l'ensemble de points lumineux par rapport au détecteur optoélectronique (3).

8. Procédé selon l'une des revendications 1 à 7, **caractérisé en ce qu'**il utilise une méthode d'orientation des axes locaux pour le calcul des positions et des orientations de l'ensemble de réflecteurs par rapport au suiveur laser (2), les positions relatives des réflecteurs (5) et éventuellement des réflecteurs auxiliaires (5') étant dans ce but déterminées préalablement.

9. Dispositif (9) d'étalonnage d'un système de mesure qui présente :
un appareil de mesure (1) doté d'un suiveur laser (2) et d'un détecteur optoélectronique (3) disposés en des positions mutuellement inchangeables,
un instrument auxiliaire de mesure (4) et un calculateur système,
au moins un réflecteur (5) qui réfléchit un faisceau de mesure (7) orienté sur lui par le suiveur laser (2),
au moins trois points lumineux (6) aptes à être enregistrés par le détecteur optoélectronique (3) étant disposés en un agencement connu de points lumineux sur l'instrument auxiliaire de mesure (4),
**caractérisé en ce que**
lorsque l'appareil de mesure présente moins de trois réflecteurs (5) comme ensemble de réflecteurs, le dispositif (9) présente un élément de réflecteur doté de réflecteurs auxiliaires,
l'instrument auxiliaire de mesure pouvant être monté rigidement sur l'élément de réflecteur, l'instrument auxiliaire de mesure et l'élément de réflecteur présentant ensemble un ensemble d'au moins trois réflecteurs de l'ensemble de réflecteurs,
**en ce que** le dispositif présente des moyens de montage avec lesquels l'instrument auxiliaire de mesure (4) ou, dans le cas d'un instrument auxiliaire de mesure qui présente moins de trois réflecteurs, l'instrument auxiliaire de mesure et l'élément réflecteur peut être monté en au moins deux orientations différentes sur le dispositif (9) de telle sorte que des données de mesure peuvent être obtenues concernant l'ensemble de points lumineux et l'ensemble de réflecteurs dans au moins deux positions de rotation autour d'au moins deux axes de rotation différents l'un de l'autre par rapport à l'instrument auxiliaire de mesure et qui traversent l'ensemble de points lumineux et l'ensemble de réflecteurs en une partie centrale dans différentes directions et
**en ce que** le dispositif (9) présente en outre des moyens de positionnement qui permettent de le positionner par rapport à l'appareil de mesure (1) de telle sorte que l'instrument auxiliaire de mesure (4) qui y est monté peut être mesuré dans chacune des positions de rotation par le suiveur laser (2) et le détecteur optoélectronique (3) de l'appareil de mesure (1).

10. Dispositif selon la revendication 9, **caractérisé en ce que** le dispositif présente une table rotative (11) et un élément d'orientation (12) monté sur la table rotative et **en ce que** les moyens de montage sont disposés sur l'élément d'orientation (12).

11. Dispositif selon la revendication 10, **caractérisé en ce que** l'élément d'orientation (12) a la forme d'un biseau.

12. Dispositif selon la revendication 9, **caractérisé en ce que** le dispositif présente des moyens de montage par lesquels l'instrument auxiliaire de mesure (4) ou, dans le cas d'un instrument auxiliaire de mesure qui compte moins de trois réflecteurs, l'instrument auxiliaire de mesure ainsi que l'élément réflecteur, peut être monté en au moins quatre orientations, au moins deux des orientations pouvant passer l'une dans l'autre par rotation autour d'un axe virtuel.

13. Système de mesure doté d'un appareil de mesure (1) qui présente
un suiveur laser (2) et un détecteur électronique (3) dans des positions relatives mutuellement inchangeables,
un instrument auxiliaire de mesure (4) et un calculateur système,
au moins un réflecteur (5) qui réfléchit un faisceau de mesure (7) qui y est envoyé par un suiveur laser (2) et
au moins trois points lumineux (6) aptes à être enregistrés par le détecteur optoélectronique (5) étant disposés en un ensemble connu de points de mesure sur l'instrument auxiliaire de mesure (4),
**caractérisé en ce que**
le calculateur système est équipé pour exécuter les étapes de calcul du procédé selon l'une des revendications 1 à 8,
**en ce que** le calculateur système présente un emplacement de mémoire pour les données d'étalonnage calculées selon le procédé,
**en ce que** le calculateur système est en outre équipé pour les étapes de calcul dans lesquelles les données d'étalonnage conservées en mémoire sont utilisées et
**en ce que** le système présente en outre un dispositif d'étalonnage selon l'une des revendications 9 à 12.

14. Système de mesure selon la revendication 13, **caractérisé en ce que** l'instrument auxiliaire de mesure (4) présente des moyens qui permettent de le monter sur le dispositif d'étalonnage.

15. Système de mesure selon l'une des revendications 13 ou 14, **caractérisé en ce qu'**au moins l'un des réflecteurs (5) de l'instrument auxiliaire de mesure (4) est un prisme en coin de cube dont le sommet manque et **en ce qu'**un point lumineux (6) apte à être enregistré par le détecteur optoélectronique (3) est disposé en arrière du sommet enlevé.
